(19) Europäisches Patentamt
European Patent Office
Office européen des brevets

(11) **EP 1 983 310 A1**

(12) **EUROPEAN PATENT APPLICATION**

(43) Date of publication:
22.10.2008 Bulletin 2008/43

(51) Int Cl.:
*G01F 1/08* [(2006.01)]      *G01F 1/12* [(2006.01)]
*G01F 15/075* [(2006.01)]      *G01F 25/00* [(2006.01)]

(21) Application number: 07106554.4

(22) Date of filing: 20.04.2007

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Electrolux Home Products Corporation
N.V.**
**1930 Zaventem (BE)**

(72) Inventors:
• **Selivanov, Lev**
**199226, St. Petersburg (RU)**
• **Gerasimov, Vladimir**
**197110, St. Petersburg (RU)**

(74) Representative: **Giugni, Valter**
**PROPRIA S.r.l.**
**P.O. Box 365**
**Via della Colonna, 35**
**33170 Pordenone (IT)**

(54) **Turbine flow meter**

(57) Turbine flow-meter comprising a rotor having a plurality of blades mounted across the flow direction of a liquid, and control means for monitoring pulse signals $T_i$ generated by each complete revolution of the rotor and for calculating the quantity of liquid passing through the flow meter, the control means are adapted to measure time intervals elapsing between subsequent pulse signals $\Delta T_i = (T_i - T_{i-1})$ to determine a flow-rate value $FR_i$ corresponding to each one of the time intervals $\Delta T_i = (T_i - T_{i-1})$ based on a experimental calibration non-linear analytical function, which correlates the variation in the flow rate of a pre-determined liquid with the variation in the time interval between subsequent pulse signals of the turbine flow-meter, to calculate the discrete amount of liquid $V_i = \Delta T_i \times FR_i$ that flows during each one of said time intervals between subsequent signals $\Delta T_i = (T_i - T_{i-1})$, and thus calculate the total quantity of liquid $V_t = \Sigma_i V_i$ passing through the flow meter.

Fig 1

EP 1 983 310 A1

**Description**

The present invention refers to a turbine flow-meter.

In laundering machines, turbine flow meters, also known as fluid meters in the art, are commonly used to calculate the amount of process liquid being let into the cleaning tub.

Turbine flow-meters of the above-cited kind generally comprise a rotor having a plurality of blades mounted across the flow direction of the liquid within a conduit. Turbine rotation in these devices can be detected by appropriate solid-state or mechanical sensors. For example, the turbine can be provided with at least a magnetic plug adapted to interact with a Hall sensor or a reed switch arranged outside the pipe.

As the rotor revolves, a voltage pulse is generated, wherein each such pulse represents one complete revolution of the rotor and a discrete volume of liquid that flows through the turbine flow meter.

The frequency of the pulse signals depends on the rotational speed of the turbine.

In laundering machines in general, a need arises for the amount of process liquid being delivered and let into the cleaning tub, in which the rotating drum holding the clothes to be laundered is housed, to be determined to an acceptable degree of accuracy, so as to enable inlet valves, fluid supply or circulation pumps, and the like, to be switched off or de-energized as soon as the pre-established amount of liquid has been filled in the cleaning tub. To such purpose, the process liquid is caused to flow through the turbine flow-meter, by means of which the amount of liquid flowing towards and into the tub can therefore be monitored and calculated.

In the case that the process liquid is water being supplied under known pressure range conditions, there exists a constant linear proportionality between the speed of revolution of the turbine rotor and the flow rate of the water flowing therethrough. Therefore, the turbine flow-meter can in this case be quite reasonably assumed to have linear characteristics, and the value of the flow rate of the water flowing therethrough is determined by the control unit of the washing machine by calculating the number of pulse signals generated by the flow meter within a certain time period. Given the value of such flow rate, it is then possible for the actual amount of water flowing therethrough to be derived when the total time interval is known, during which the flow meter has been generating pulse signals.

This kind of measurement is able to assure adequate accuracy as long as the flow meter is capable of working with linear characteristics.

However, if the water is being supplied under either extremely low (about <0.2 bar) or extremely high (about >10 bar) pressure conditions, or if use is made of a process liquid having different density and viscosity characteristics than water, as this is for instance the case of the non-aqueous lipophilic fluids used in dry cleaning machines, the turbine flow-meter will operate under non-linear characteristic conditions.

In practice, since there no longer exists a simple constant linear proportionality between the speed of revolution of the turbine rotor and the flow rate of the fluid flowing through the flow meter, any estimate of the actual amount of process liquid flowing through the flow meter and, therefore, being let into the tub, would turn out as being quite inaccurate if based on said principle.

This would most obviously be of particular disadvantage in the case of dry cleaning machines, in which - owing to a closed-loop circuit arrangement being used between the tub and the process liquid tank - the possibility for the amount of liquid to be delivered into the tub during the various cleaning and rinsing steps of the process is of paramount importance, as anyone skilled in the art is fully able to most readily appreciate.

It is therefore a main object of the present invention to provide a turbine flow-meter, along with a related method for calculating the quantity of a liquid passing through the turbine flow-meter, which are effective in doing away with the above-noted drawbacks of the cited prior art.

According to the present invention, this aim, along with further ones that will become apparent from the following disclosure, is reached in a turbine flow-meter and a method incorporating the features and characteristics as defined and recited in the claims appended hereto.

Features and advantages of the present invention will anyway be more readily understood from the description that is given below by way of nonlimiting example with reference to the accompanying drawings, in which:

- Figure 1 is a diagram showing the time intervals $\Delta T_i = (T_i - T_{i-1})$ elapsing between consecutive pulse signals being measured by the control means;

- Figure 2 is a diagrammatical representation of experimental data relating to the "Flow rate ExPt" [L/ms], the non-linear analytical experimental-calibration function "ApproxFunc ExPt" [L/ms], and the flow rate values forming the calibration array "Flow rate RefPt" [L/ms];

- Figure 3 is a schematical view of the calibration apparatus;

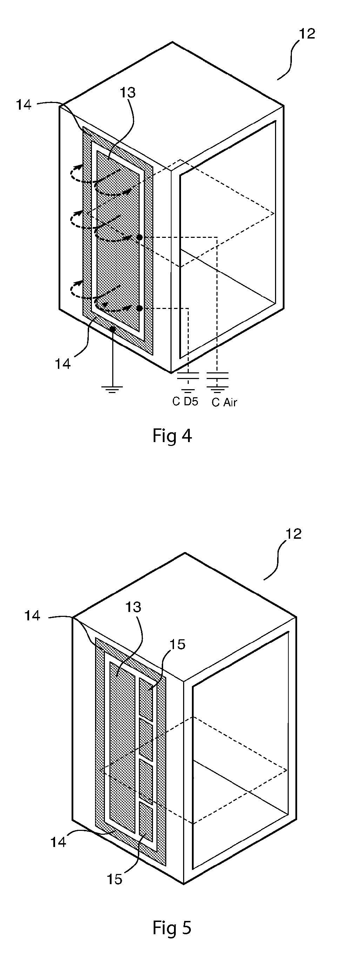

- Figure 4 is a perspective view of the measurement tank with the electrodes used to capacitive measurement purposes;

- Figure 5 is a perspective view of the measurement tank with the electrodes used to capacitive measurement purposes, in a different configuration thereof.

The turbine flow-meter comprises a rotor having a plurality of blades mounted across the flow direction of a liquid, and control means for both monitoring the pulse signals $T_i$ generated by the rotor as it revolves, and calculating the quantity of liquid that flows through the flow meter.

The control means are adapted to measure the time intervals $\Delta T_i=(T_i-T_{i-1})$ elapsing between, i.e. separating subsequent pulse signals $T_i$ from each other, so as to determine a flow-rate value $FR_i$ corresponding to each one of said time intervals $\Delta T_i=(T_i-T_{i-1})$ based on an experimental calibration non-linear analytical function, which correlates the variation in the flow rate of a given liquid to the variation in the time interval between subsequent pulse signals of said turbine flow-meter, to calculate the discrete amount of liquid $V_i= \Delta T_i \times FR_i$ that flows during each such time interval $\Delta T_i=(T_i-T_{i-1})$ between subsequent pulse signals $T_i$ and thus calculate the total quantity of liquid $Vt= \Sigma_i V_i$ passing through the flow meter.

The rate of revolution of the rotor, which clearly depends on the flow-rate value of the liquid passing through the flow meter, can be detected by solid-state or mechanical sensors known in the art, such as Hall sensors or reed switches.

A signal, for example a voltage pulse, is generated at each complete revolution of the rotor, so that each pulse signal $T_i$ represents a complete revolution of the rotor.

Each pulse signal $T_i$ generated by a complete revolution of the rotor is input to, i.e. received by the control means, which measure each time interval $\Delta T_i=(T_i-T_{i-1})$ elapsing between two consecutive pulse signals $T_i$.

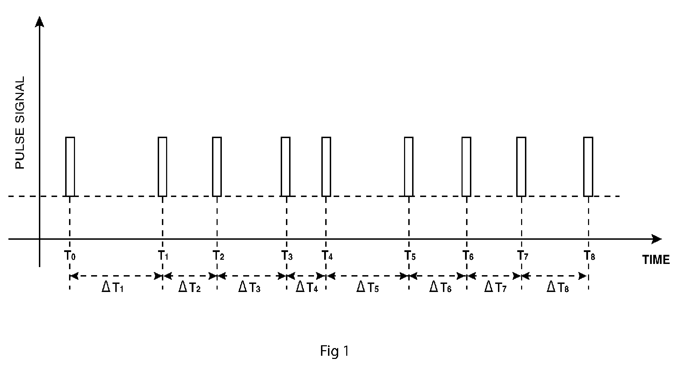

In practice, if a complete revolution is detected to occur at the instant To and the next complete revolution of the rotor is then detected to occur at the instant $T_1$, the control means will measure the time interval $\Delta T_1=(T_1-T_0)$ that has elapsed between the two pulse signals. A time measurement like this is performed for each period between two consecutive revolutions of the rotor, i.e. $\Delta T_i=(T_i-T_{i-1})$, while the liquid is flowing through the flow meter, as shown schematically in Figure 1.

The time interval elapsing between two consecutive pulse signals, i.e. two complete revolutions of the rotor occurring subsequently, varies depending on the flow rate of the liquid flowing through the flow meter rotor.

The control means are able to determine the flow-rate value $FR_i$ corresponding to each such measured time interval $\Delta T_i=(T_i-T_{i-1})$ based on an experimental calibration non-linear analytical function, which correlates the variation in the flow rate of a pre-determined liquid to the variation in the time interval between subsequent signals of a pre-determined turbine flow-meter (i.e. for a given type of turbine flow-meter).

For such calibration function to be obtained, exhaustive test runs have been carried out, in which the time interval, i.e. the period between consecutive pulses has been measured while varying the flow rate of the liquid allowed to pass through the flow meter. The resulting experimental data have then been used to derive - by successive approximations - an analytical function having a variation pattern that coincides with the experimental data and, therefore, providing the analytical relation that links the variation in the flow rate with the variation in the time interval between subsequent pulse signals.

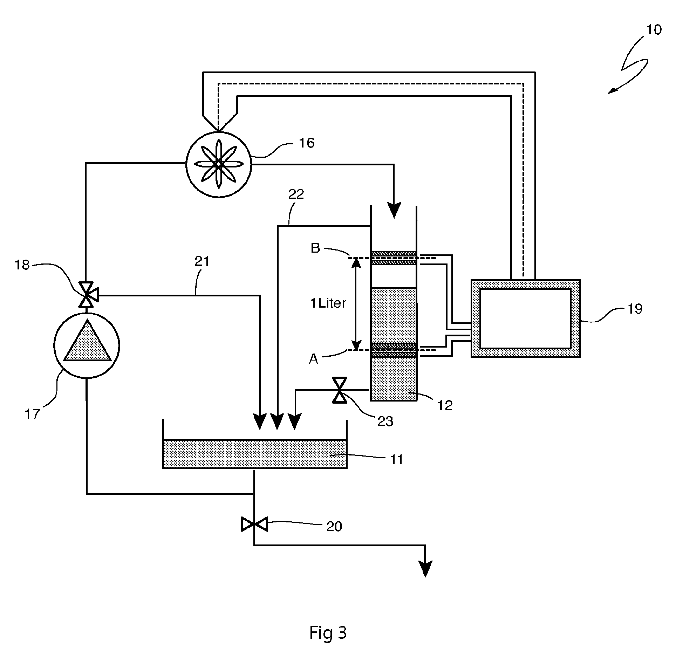

To such purpose, it has been designed the calibration apparatus 10 illustrated in Figure 3, wherein the time required to fill a reference amount, e.g. 1 litre, of a given liquid - decamethylcyclopentasiloxane (also known as D5) - into a reference volume has been measured, and the number of pulse signals has been detected and counted, which were generated while filling the reference volume with the related reference amount of liquid.

The reference liquid has been delivered into the reference volume at a given flow-rate value, which was kept constant throughout each single test run, wherein a number of test runs have been carried out at different flow-rate values of the liquid involved, so as to collect as many experimental data as possible for the experimental calibration non-linear analytical function to be able to be constructed.

The calibration apparatus comprises a buffer tank 11 adapted to hold the liquid - approx. five litres - to be used in the tests, and a measurement tank 12, where capacitive measurements made via electrodes 13, 14, 15 applied to the wall of the measurement tank 12 enable the reference volume being filled to be monitored and the time required to fill the reference amount of liquid into the reference volume to be detected, i.e. measured.

The buffer tank 11 and the measurement tank 12 are fluidly connected with each other via a hydraulic, i.e liquid-carrying circuit comprising the turbine flow-meter 16 to be calibrated, which issues the pulse signals as the liquid flows therethrough, a pump 17, which is connected upstream to the flow meter 16 to deliver the liquid from the buffer tank 11 to the measurement tank 12, and an adjustment valve 18, such as a 3-way valve provided between the pump 17 and the flow meter 16, to vary the flow rate of the liquid entering the flow meter 16.

Along the walls of the measurement tank 12 there are applied conductive electrodes 13, 14, 15 so as to form one or more planar parallel-electrode capacitors arrangement adapted to detect the level of the liquid inside the measurement tank 12 and, thus, monitor the reference volume of the measurement tank 12 being filled from a lower reference level A up to an upper reference level B.

In a configuration being shown here to mere exemplary purposes, a planar capacitor arrangement of the above-cited kind may comprise a main electrode 13 surrounded by an enclosing grounded (i.e. connected to ground) electrode 14, which extend on the wall of the measurement tank 12 over the height thereof. Since the liquid D5 has dielectric properties differing from those of air, the total capacitance value of the planar capacitor arrangement will vary in accordance with the level of the liquid D5 inside the measurement tank 12.

Once the capacitance value determined by the liquid when reaching the lower reference level A and the capacitance value determined by the liquid when reaching the upper reference level B have been measured, the possibility is given for the filling state of the reference volume between said two reference levels to be monitored with due accuracy.

For the sensitivity of the arrangement in the measurement of the level of the liquid to be further enhanced, a plurality of auxiliary electrodes 15 may be provided to flank, i.e. to stand alongside the main electrode 13 in a parallel arrangement thereto, wherein the enclosing electrode 14 is provided to surround both the main electrode 13 and the auxiliary electrodes 15.

The calibration apparatus further comprises an electronic monitoring unit 19 connected to both the turbine flowmeter 16, so as to acquire the pulse signals generated by the revolutions of the rotor, and the electrodes 13, 14, 15 of the planar capacitor arrangement, so as to detect the capacitance values indicative of the level reached by the liquid inside the measurement tank 12.

The hydraulic, i.e. liquid-carrying circuit of the calibration apparatus also includes a drain valve 20, which is fluidly connected to the buffer tank 11 to enable the liquid to be fully drained off the circuit and the calibration apparatus.

An intercepting conduit 21 is provided to directly connect the flow adjustment valve 18 to the buffer tank 11 and bypass the turbine flow-meter 16 and the measurement tank 12. This practically enables part of the liquid flowing towards the turbine flow-meter 16 to be intercepted, so that the latter can be supplied with liquid at extremely low flow rate values.

A backup conduit 22 is provided to directly connect the measurement tank 12 to the buffer tank 11, so as to avoid liquid losses due to liquid overflowing from the measurement tank 12, as this may possibly be caused to occur by the pump 17.

A reset valve 23 enables the liquid to be drained off the measurement tank 12 and returned to the buffer tank 11 once a test conducted for a given flow-rate value has been concluded and the pump is de-energized.

The reference volume covers, i.e. fills a portion situated at approximately half the height of the measurement tank 12, which in other words means that the afore-mentioned lower reference level A is situated to lie well above the bottom of the measurement tank 12, so that measurements can start to be taken when transient oscillations (or any other phenomenon, such as for instance cavitation, that is likely to occur), as may be generated by the pump 17 when it starts operating, have eventually come to an end and the liquid-carrying circuit itself is under steady-state conditions.

The various tests conducted to data collection purposes include adjusting the flow rate of the liquid due to flow through the flow meter 16, by selectively actuating the flow-adjustment valve 18 and energizing the pump 17 to cause it to deliver the liquid from the buffer tank 11 to measurement tank 12.

The electronic monitoring unit 19 is adapted to carry out the aforenoted capacitive measurements in a continuous manner via the electrodes 13, 14, 15 to continuously monitor the level and, thus, the amount of liquid being filled into the measurement tank 12.

When the level of the liquid in the measurement tank 12 is then detected to have reached up to the lower reference level A, and the liquid-carrying circuit has therefore reached steady-state conditions, the electronic monitoring unit 19 starts acquiring and counting the pulse signals generated by the flow meter 16, as well as measuring a time interval starting from the instant at which the liquid in the measurement tank 12 reaches the lower reference level A, as noted above.

When the capacitive measurements are such as to indicate that the liquid inside the measurement tank 12 has reached up to the upper reference level B or, in other words, when the reference volume is detected to have been filled with the reference amount of liquid being tested, the electronic monitoring unit 19 stops acquiring and counting the pulse signals and measuring the time interval.

The electronic monitoring unit 19 then provides both the time interval needed to fill the reference volume and the number of pulse signals generated by the flow meter 16 during such time interval.

Advantageously, the reference volume is sized, i.e. calibrated so that the reference amount of liquid due to fill it coincides with, i.e. equals one litre.

The time interval measured and the number of pulse signals counted thus refer to filling one litre of liquid D5 into the reference volume.

A number of tests have been carried out at different flow rates of the liquid being filled, and the data collected therefrom are set forth in following table:

| Time [*0,1s] | Pulses/L | Time [min] | Flow rate [L/min] | Freq.-[Hz] | Period[ms] |
|---|---|---|---|---|---|
| 273 | 60 | 0.46 | 2.20 | 2.20 | 455.00 |

(continued)

| Time [*0,1s] | Pulses/L | Time [min] | Flow rate [L/min] | Freq.-[Hz] | Period[ms] |
|---|---|---|---|---|---|
| 191 | 180 | 0.32 | 3.14 | 9.42 | 106.11 |
| 171 | 193 | 0.29 | 3.51 | 11.29 | 88.60 |
| 164 | 191 | 0.27 | 3.66 | 11.65 | 85.86 |
| 153 | 216 | 0.26 | 3.92 | 14.12 | 70.83 |
| 140 | 218 | 0.23 | 4.29 | 15.57 | 64.22 |
| 130 | 239 | 0.22 | 4.62 | 18.38 | 54.39 |
| 124 | 253 | 0.21 | 4.84 | 20.40 | 49.01 |
| 117 | 251 | 0.20 | 5.13 | 21.45 | 46.61 |
| 100 | 264 | 0.17 | 6.00 | 26.40 | 37.88 |
| 93 | 264 | 0.16 | 6.45 | 28.39 | 35.23 |
| 81 | 281 | 0.14 | 7.41 | 34.69 | 28.83 |
| 71 | 270 | 0.12 | 8.45 | 38.03 | 26.30 |
| 64 | 267 | 0.11 | 9.38 | 41.72 | 23.97 |
| 50 | 255 | 0.08 | 12.00 | 51.00 | 19.61 |

wherein:

Time *[\*0.1s]* represents the time, in tenths of a second, needed to fill the reference volume with one litre of liquid D5, e.g. 273 corresponds to 27.3 seconds;

*Pulses/L* represents the total number of pulse signals acquired during the time interval needed to fill the reference volume with one litre of liquid D5;

*Time [min]* represents the same data set forth in the column *time [\*0.1s],* but calculated in minutes, thus time [*0,1s] $\div 10 \div 60$;

*Flow rate [L/min]* represents the flow rate of the liquid, in litres per minute, as calculated by dividing one litre of liquid (reference amount) by the values in column *Time [min]*, e.g. - when referring to the first line of the table - 2.20 (1/min) is the value thus obtained from (1 litre)/0,46 min;

*Frequency [Hz]* represents the number of pulse signals per second received during filling one litre of liquid D5 into the reference volume, as calculated by dividing the values in the column *Pulses/L* by the values in the column *time [\*0.1s]/10,* e.g. - when referring to the first line of the table - 2.2 Hz is the value thus obtained from (60 pulses/L) $\div$ (27.3s);

*Period [ms]* represents the time interval, in thousandths of a second, separating two consecutive pulse signals from each other and, therefore, the time interval needed by the rotor to complete two subsequent revolutions, as calculated as the reciprocal, in ms, of the values in the column *Frequency [Hz]*.

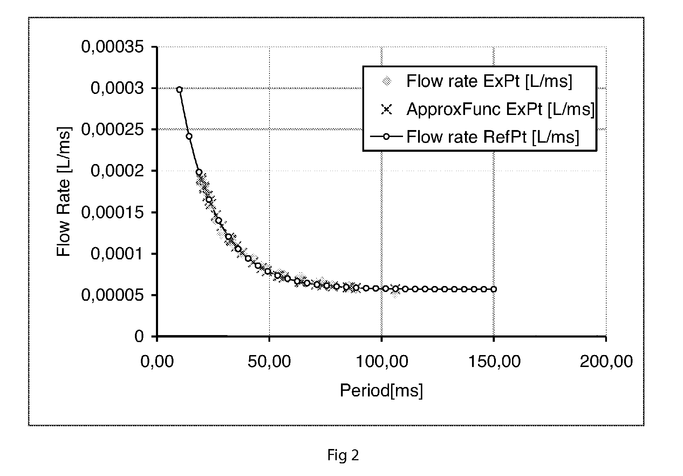

The experimental data expressing the relation existing between the flow rate values in litres per thousandth of a second and the period (time interval separating two consecutive rotor revolutions) in thousandths of a second are shown in the graph appearing in Figure 2, where they are indicated as "Flow rate ExPt" [L/ms], wherein the values in the columns *"flow rate"* and "*period*" have of course been used to determine the points in the graph.

The analytical function approximating the experimental data collected has been derived using common math solver tools.

It has been found that an exponential function such as:

$$v(T) = a + b \cdot \exp(c \cdot T + d)$$

wherein T represents the period (time interval between subsequent rotor revolutions) and $v(T)$ represents the flow rate,

best expresses the correlation existing between a variation in the flow rate and the corresponding variation in the period taking into account the experimental data obtained from the calibration apparatus by using a given turbine flow meter and decamethylcyclopentasiloxane as test liquid.

Using iterative calculation methods, the square deviation of the exponential function from the experimental data has been minimized so as to be able to obtain a value for the parameters *a, b,* c, d such that, when they are introduced in the exponential function, these parameters turn out as being the best possible match for the experimentally obtained data.

Such exponential function, the trend pattern of which is shown in Figure 2 under "ApproxFunc ExPt", has been used as the experimental calibration non-linear analytical function for calculating the amount of liquid flowing through the flow meter.

As already described hereinbefore, the control means are adapted to measure the time intervals or periods $\Delta T_i=(T_i-T_{i-1})$ separating two consecutive pulse signals, i.e. two complete successive rotor revolutions, from each other.

Using the experimental calibration non-linear analytical function, the control means are therefore able to determine the value of the flow rate $FR_i$ corresponding to the measured time interval $\Delta T_i$.

Then, the control means multiply the time interval $\Delta T_i$ by the corresponding flow-rate value $FR_i$ to calculate the volume of liquid $V_i= \Delta T_i \times FR_i$ that flows through the flow meter during such time interval $\Delta T_i$.

The control means apply the above-described algorithm for each one of the measured time intervals and, by adding up the discrete volumes of liquid that flow through the flow meter during each of the measured time intervals $\Delta T_i=(T_i-T_{i-1})$, it is then able to calculate the total amount of liquid $Vt= \Sigma_i V_i$ that has passed through the flow meter between the first and the last pulse signal detected.

Advantageously, for the calculation algorithm to be simplified and sped up, the experimental calibration non-linear analytical function (i.e. the afore-mentioned exponential function obtained from the collected experimental data) has been used to calculate flow rate values $v_i$ [L/ms] corresponding to equidistant time periods $\Delta p_i$ (i.e. to values of the argument of the exponential function), as increased by a constant increment relative to each other. In practice, time periods selected in the following manner:

$$\Delta p_1, \ \Delta p_2=\Delta p_1+dt, \ \Delta p_3=\Delta p_2+dt, \ \Delta p_4=\Delta p_3+dt$$

wherein dt is a constant increment,
have been introduced in the experimental calibration non-linear analytical function (as the argument of the exponential function), and the corresponding flow-rate values $v_i$ have then been calculated.

When put together, these data provide a calibration array comprised of a set of equidistant time periods $\Delta p_i$ and the corresponding flow-rate values $v_i$.

Between 10 and 150 ms, for instance, the time periods $\Delta p_i$ have been increased by constant increments dt of 4.375 ms, so as to obtain a total of 32 equidistant time periods $\Delta p_i$ corresponding to 32 flow-rate values $v_i$, providing the calibration array that is illustrated below, the values of which are shown as "Flow rate RefPt" [L/ms] in the graph appearing in Figure 2.

| Period RefPt[ms] ($\Delta p_i$) | Flow rate RefPt[l/ms] ($v_i$) | Period RefPt[ms] ($\Delta p_i$) | Flow rate RefPt[l/ms] ($v_i$) |
|---|---|---|---|
| 10 | 0,000298 | 80 | 6,007E-05 |
| 14,375 | 0,0002416 | 84,375 | 5,928E-05 |
| 18,75 | 0,0001983 | 88,75 | 5,867E-05 |
| 23,125 | 0,0001652 | 93,125 | 5,82E-05 |
| 27,5 | 0,0001398 | 97,5 | 5,785E-05 |
| 31,875 | 0,0001204 | 101,875 | 5,757E-05 |
| 36,25 | 0,0001055 | 106,25 | 5,736E-05 |
| 40,625 | 9,407E-05 | 110,625 | 5,72E-05 |
| 45 | 8,532E-05 | 115 | 5,708E-05 |
| 49,375 | 7,862E-05 | 119,375 | 5,698E-05 |
| 53,75 | 7,349E-05 | 123,75 | 5,691E-05 |
| 58,125 | 6,956E-05 | 128,125 | 5,686E-05 |
| 62,5 | 6,654E-05 | 132,5 | 5,681E-05 |
| 66,875 | 6,424E-05 | 136,875 | 5,678E-05 |
| 71,25 | 6,247E-05 | 141,25 | 5,676E-05 |
| 75,625 | 6,111E-05 | 145,625 | 5,674E-05 |
| | | 150 | 5,672E-05 |

It can be most readily appreciated that, when using different values for the constant increment *dt*, a number of different calibration arrays can be constructed. So, for instance, a constant increment dt of 2 ms has been used between 20 and 200 ms to construct a calibration array comprised of 90 equidistant time periods $\Delta p_i$ and related flow-rate values $v_i$.

The calibration array is implemented in the memory of the control means, which are thus adapted to compare each time interval $\Delta T_i$, as measured between subsequent pulse signals $T_i$, with the time periods $\Delta p_i$ of the calibration array, so as to determine between which ones of the time periods $\Delta p_i$ there comes to be situated the time interval $\Delta T_i$ measured by the control means. The control means then perform a linear interpolation between the flow rate values $v_i$ corresponding to the time periods $\Delta p_i$ of the calibration array, between which the measured time interval $\Delta T_i$ is situated, in view of determining the actual value $FR_i$ of the flow rate corresponding to the measured time interval $\Delta T_i$.

As described hereinbefore, the control means then multiply the time interval $\Delta T_i$ by the corresponding flow rate value $FR_i$ to calculate the volume of liquid $V_i = \Delta T_i \times FR_i$ that has flown through the flow meter during the time interval $\Delta T_i = (T_i - T_{i-1})$.

The control means apply the algorithm based on the calibration array for each one of the measured time intervals and, by adding up the single volumes of liquid that flow through the flow meter during each of the measured time intervals $\Delta T_i = (T_i - T_{i-1})$, it is then able to calculate the total amount of liquid $V_t = \Sigma_i V_i$ that is passing through the flow meter.

By means of the afore-described calibration apparatus it is therefore possible for the experimental calibration non-linear analytical function of a given turbine flow-meter to be derived for different types of liquids, such as for example, and in particular, for different non-aqueous lipophilic fluids intended for use as process liquid in a dry cleaning machine.

In case of different experimental conditions (i.e. different turbine flow meter and different liquid), a non-linear polynomial function, instead of the exponential function, can better express the correlation existing between the variation in the flow rate and the corresponding variation in the time interval between subsequent rotor revolutions.

The present invention has proved to be quite useful and advantageous in the case of household laundering machines of the dry-cleaner type, in which a turbine flow-meter is used to fill a pre-determined amount of a non-aqueous lipophilic fluid, such as in particular D5, into the process tub from the cleaning fluid tank or the rinse fluid tank.

The turbine flow-meter and the method for calculating the quantity of a liquid passing through a turbine flow-meter according to the present invention enable the actual value of the flow rate of the liquid to be determined under non-linear conditions and, as a result, the amount of liquid flowing through the flow meter to be calculated with much more accuracy than simply assuming that the turbine flow meter works in linear condition.

**Claims**

1. Turbine flow-meter comprising a rotor having a plurality of blades mounted across the flow direction of a liquid, and control means for monitoring pulse signals $T_i$ generated by each complete revolution of the rotor and for calculating the quantity of liquid passing through the flow meter, **characterized in that** said control means are adapted to measure time intervals elapsing between subsequent pulse signals $\Delta T_i=(T_i-T_{i-1})$ to determine a flow-rate value $FR_i$ corresponding to each one of said time intervals $\Delta T_i=(T_i-T_{i-1})$ based on a experimental calibration non-linear analytical function, which correlates the variation in the flow rate of a pre-determined liquid with the variation in the time interval between subsequent pulse signals of said turbine flow-meter, to calculate the discrete amount of liquid $V_i=\Delta T_i \times FR_i$ that flows during each one of said time intervals between subsequent signals $\Delta T_i=(T_i-T_{i-1})$, and thus calculate the total quantity of liquid $V_t=\Sigma_i V_i$ passing through the flow meter.

2. Turbine flow-meter according to claim 1, wherein said control means comprise a calibration array formed of equidistant time periods $\Delta p_i$, i.e. increased by a constant increment *dt* relative to each other, $\Delta p_2=\Delta p_1+dt$, $\Delta p_3=\Delta p_2+dt$, $\Delta p_4=\Delta p_3+dt$, and the corresponding flow-rate values $v_i$ calculated by introducing said equidistant time periods $\Delta p_i$ in said experimental calibration non-linear analytical function, said control means being adapted to compare each time interval $\Delta T_i$ measured between subsequent pulse signals $T_i$ with the equidistant time periods $\Delta p_i$ of the calibration array, so as to determine between which ones of said time periods $\Delta p_i$ there comes to be situated the measured time interval $\Delta T_i$, said control means being further adapted to perform a linear interpolation between the flow-rate values $v_i$ corresponding to the equidistant time periods $\Delta p_i$ of the calibration array, between which the measured time interval $\Delta T_i$ is situated, in view of determining the actual value $FR_i$ of the flow rate corresponding to the measured time interval $\Delta T_i$.

3. Turbine flow-meter according to claim 1, wherein said pre-determined liquid is a non-aqueous lipophilic fluid for fabric dry-cleaning applications.

4. Turbine flow-meter according to claim 3, wherein said non-aqueous lipophilic fluid is a cyclic siloxane.

5. Dry cleaning machine comprising a chamber for receiving fabric articles, **characterized in that** it comprises at least a turbine flow-meter according to claim 1 for dispensing a determined amount of a process liquid into the chamber.

6. Method for calculating the quantity of a liquid passing through a turbine flow-meter comprising a rotor having a plurality of blades mounted across the flow direction of a liquid, and control means for monitoring the pulse signal $T_i$ generated by each complete revolution of the rotor, **characterized in that** the method comprises the steps of:

   (a) measuring the time intervals elapsing between subsequent pulse signals $\Delta T_i=(T_i-T_{i-1})$,
   (b) determining the flow-rate value $FR_i$ corresponding to each one of said time intervals $\Delta T_i=(T_i-T_{i-1})$ based on a experimental calibration non-linear analytical function, which correlates the variation in the flow rate of said liquid to the variation in the time interval between subsequent pulse signals of said turbine flow-meter,
   (c) calculating the discrete amount of liquid $V_i=\Delta T_i \times FR_i$ that flows during each one of said time intervals between subsequent signals $\Delta T_i=(T_i-T_{i-1})$;
   (d) calculating the total quantity of liquid $Vt=\Sigma_i V_i$ passing through the flow meter.

7. Method according to claim 6, wherein step (b) comprises:

   - creating a calibration array formed of equidistant time periods $\Delta p_i$, i.e. increased by a constant increment *dt* relative to each other, $\Delta p_2=\Delta p_1+dt$, $\Delta p_3=\Delta p_2+dt$, $\Delta p_4=\Delta p_3+dt$, and the corresponding flow-rate values $v_i$ calculated by introducing said equidistant time periods $\Delta p_i$ in said experimental calibration non-linear analytical function;
   - comparing each time interval $\Delta T_i$ measured between subsequent pulse signals $T_i$ with the equidistant time periods $\Delta p_i$ of the calibration array, so as to determine between which ones of said time periods $\Delta p_i$ there comes to be situated the measured time interval $\Delta T_i$;
   - performing a linear interpolation between the flow-rate values $v_i$ corresponding to the equidistant time periods $\Delta p_i$ of the calibration array, between which the measured time interval $\Delta T_i$ is situated, in view of determining the actual value $FR_i$ of the flow rate corresponding to the measured time interval $\Delta T_i$.

Fig 1

Fig 2

Fig 3

Fig 4

Fig 5

European Patent Office

**EUROPEAN SEARCH REPORT**

Application Number

EP 07 10 6554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 885 943 A (TOOTELL TERENCE S [CA] ET AL) 12 December 1989 (1989-12-12) * column 6, line 51 - column 17, line 20; figures 1-8 * | 1-7 | INV. G01F1/08 G01F1/12 G01F15/075 G01F25/00 |
| X | US 5 016 187 A (FORKERT MAURICE J [US] ET AL) 14 May 1991 (1991-05-14) * column 3, line 22 - column 9, line 12; figures * | 1-7 | |
| X | US 2006/074570 A1 (BELKE BRAD [CA] ET AL) 6 April 2006 (2006-04-06) * paragraphs [0057] - [0088]; figures * | 1,2,6,7 | |
| X | EP 0 626 566 A (CONTADORES DE AGUA DE ZARAGOZA [ES]) 30 November 1994 (1994-11-30) * column 9, line 29 - column 12, line 39; figures 1-7 * * column 16, line 12 - line 43 * | 1-7 | |

TECHNICAL FIELDS SEARCHED (IPC)

G01F

The present search report has been drawn up for all claims

| Place of search | Date of completion of the search | Examiner |
|---|---|---|
| Munich | 22 November 2007 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 07 10 6554

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2007

| Patent document cited in search report | | Publication date | Patent family member(s) | | Publication date |
|---|---|---|---|---|---|
| US 4885943 | A | 12-12-1989 | NONE | | |
| US 5016187 | A | 14-05-1991 | NONE | | |
| US 2006074570 | A1 | 06-04-2006 | NONE | | |
| EP 0626566 | A | 30-11-1994 | DE | 69429129 D1 | 03-01-2002 |
| | | | DE | 69429129 T2 | 11-07-2002 |

EPO FORM P0459

For more details about this annex : see Official Journal of the European Patent Office, No. 12/82